# EUROPEAN PATENT APPLICATION

(11) **EP 4 506 406 A1**
(43) Date of publication of application: **12.02.2025**
(21) Application number: 23811687.5
(22) Date of filing: 16.05.2023
(51) Int. Cl.: C08L 21/00, C08F 8/42, C08K 3/04, C08K 3/36, C08L 23/26

(54) **RUBBER COMPOSITION AND TIRE**

(30) Priority: 26.05.2022 JP 2022086184
(71) Applicant: The Yokohama Rubber Co., Ltd., Hiratsuka-shi, Kanagawa 254-8601 (JP)
(72) Inventor: SAIKI, Takeaki, Hiratsuka-shi, Kanagawa 254-8601 (JP); SHIROKAWA, Takashi, Hiratsuka-shi, Kanagawa 254-8601 (JP); KITAMURA, Takamasa, Hiratsuka-shi, Kanagawa 254-8601 (JP); KARASAWA, Yuichiro, Hiratsuka-shi, Kanagawa 254-8601 (JP)
(74) Representative: Dilg, Haeusler, Schindelmann Patentanwaltsgesellschaft mbH
(86) International application number: PCT/JP2023/018237
(87) International publication number: WO 2023/228813

(57) **Abstract**

The present invention provides a rubber composition including, per 100 parts by mass of a rubber component (A), 1 to 100 parts by mass of a polyolefin (B) having a hydrolytically condensable silyl group in a molecule (however, except a high-density polyethylene having a density of 0.950 g/cm³ or higher) blended.

## Description

### Technical Field

The present invention relates to a rubber composition and a tire using the rubber composition and particularly relates to a rubber composition that has excellent processability, maintains high hardness while maintaining elongation at break, and has low heat build-up and a tire using the rubber composition.

### Background Art

In production of rubber for a tire, reduction of the viscosity of the rubber is required. In this way, excellent rubber extrudability, sheet processability, and the like can be achieved.

Meanwhile, demands for improvement in fuel efficiency for vehicles have been increased from the perspective of the global environment, and development of a tire having good rolling resistance has been desired. Thus, many technologies that blend silica and a silane coupling agent into diene rubber have been proposed; however, such rubber has a problem of deterioration in processability as the rubber becomes highly viscous.

Tires in recent years are strongly required to improve, in particular, steering stability such as braking performance during high-speed travel, and the rubber needs to have a high degree of hardness. Because of this, techniques such as blending a large amount of fillers have been employed; however, in such blending, there is a problem of rolling resistance of the rubber composition becoming larger.

There are techniques that increase amounts of sulfur and fillers to impart durability to tires; however, these techniques have problems of deterioration in heat build-up and elongation at break.

From the above, it has been difficult in the art to impart all processability, elongation at break, hardness, and low heat build-up to a rubber composition at high levels.

Patent Document 1 below describes a rubber composition that blends 2 to 75 parts by weight of a high-density polyethylene with respect to 100 parts by weight of a rubber component and is kneaded at a temperature higher than a melting point of a blended resin. However, Patent Document 1 does not describe or suggest the technological thought by which a rubber composition provided with all processability, elongation at break, hardness, and low heat build-up at high levels is provided by using a polyolefin (B) having a hydrolytically condensable silyl group in a molecule and having a density of less than 0.950 g/cm³, which is essential in the present invention described below.

### Citation List

### Patent Literature

Patent Document 1: JP 3657839 B

### Summary of Invention

### Technical Problem

An object of the present invention is to provide a rubber composition that has adequate processability and hardness, maintains elongation at break, and has low heat build-up.

### Solution to Problem

The present inventors, as a result of diligent research, discovered that the object described above could be achieved by compounding a specific amount of polyolefin having a hydrolytically condensable silyl group in a molecule and having a density in a specific range in a rubber component, and thus completed the present invention.

That is, the present invention provides a rubber composition including, per 100 parts by mass of a rubber component (A), 1 to 100 parts by mass of a polyolefin (B) having a hydrolytically condensable silyl group in a molecule (however, except a high-density polyethylene having a density of 0.950 g/cm³ or higher) blended.

### Advantageous Effects of Invention

The rubber composition of an embodiment of the present invention includes, per 100 parts by mass of the rubber component (A), 1 to 100 parts by mass of the polyolefin (B) having a hydrolytically condensable silyl group in a molecule (however, except a high-density polyethylene having a density of 0.950 g/cm³ or higher) blended and can provide a rubber composition that has adequate processability and hardness, maintains elongation at break, and has low heat build-up and a tire using the rubber composition.

The polyolefin (B) used in an embodiment of the present invention improves processability by acting as a softener at high temperatures when unvulcanized. The polyolefin (B) crosslinks when a silyl group undergoes hydrolysis-condensation while entangled in a rubber molecule after vulcanization, and improves elongation at break and hardness due to aggregation of polyolefin in a temperature range of practical use of a tire.

In the rubber composition of a silica-containing system, a silyl group reacts with a silanol group on a silica surface and forms a matrix with a rubber molecule-silane coupling agent through a silica, thus the silyl group does not become a foreign material in the rubber matrix to be sulfur-crosslinked, and effects on elongation at break and low heat build-up are exhibited. Furthermore, in the rubber composition of a silica-containing system, because of a reaction with silica during kneading, shear force during kneading is transmitted to the silica aggregate, the aggregation is dissolved, dispersion is improved, and thus low heat build-up is improved.

### Description of Embodiments

The present invention will be described in further detail below.

### Rubber Component (A)

The rubber component to be used in an embodiment of the present invention is not limited to particular rubber components, and examples thereof include natural rubber (NR), isoprene rubber (IR), butadiene rubber (BR), styrene-butadiene copolymer rubber (SBR), acrylonitrile-butadiene copolymer rubber (NBR), and a hydrogenated product of these. Among these, from the perspective of improving the effect of an embodiment of the present invention, a combined system of NR and/or IR and BR, and a hydrogenated product of SBR or NBR are preferred. Note that the molecular weight and the microstructure of the rubber component are not limited. The diene rubber may be terminal-modified with an amine, amide, silyl, alkoxysilyl, carboxyl, or hydroxyl group or may be epoxidized.

### Polyolefin (B)

The polyolefin (B) to be used in an embodiment of the present invention is a polyolefin having a hydrolytically condensable silyl group in a molecule (however, except a high-density polyethylene having a density of 0.950 g/cm³ or higher). The density in an embodiment of the present invention can be measured by the method described in JIS K 7112 and refers to a density of an unmodified polyolefin that is a base resin before the hydrolytically condensable silyl group is contained.

Examples of the polyolefin that is a base resin include polyethylenes such as a low-density polyethylene (LDPE), a linear low-density polyethylene (LLDPE), and an ultra-low-density polyethylene (ULDPE) (except a high-density polyethylene having a density of less than 0.950 g/cm³), an ethylene-α-olefin copolymer, an ethylene-(meth)acrylate copolymer, an ethylene-vinyl acetate copolymer (EVA), a propylene-ethylene copolymer, a propylene-ethylene-butene copolymer, and a propylene-butene copolymer. Among these, from the perspective of improving the effect of an embodiment of the present invention, a polyolefin including an ethylene-α-olefin copolymer, an ethylene-vinyl acetate copolymer, an ethylene-methyl acrylate copolymer, a propylene-ethylene copolymer also called a random polypropylene, or a propylene-ethylene-butene copolymer as a main backbone is preferred. An ethylene-(meth)acrylate copolymer and an ethylene-vinyl acetate copolymer (EVA) preferably include an amount of a contained polar monomer of 1 to 60 mass%.

From the perspective of improving the effect of an embodiment of the present invention, in a case of a polyethylene, the density of the polyolefin (B) is preferably 0.850 g/cm³ or higher and less than 0.950 g/cm³, more preferably 0.870 g/cm³ or higher and 0.940 g/cm³ or lower, and particularly preferably 0.900 g/cm³ or higher and 0.930 g/cm³ or lower.

In a case of an ethylene-α-olefin copolymer, the density of the polyolefin (B) is preferably 0.850 g/cm³ or higher and less than 0.950 g/cm³, more preferably 0.860 g/cm³ or higher and 0.930 g/cm³ or lower, and particularly preferably 0.870 g/cm³ or higher and 0.920 g/cm³ or lower.

In a case of an ethylene-(meth)acrylate copolymer, the density of the polyolefin (B) is preferably 0.910 g/cm³ or higher and 1.000 g/cm³ or lower, and more preferably 0.920 g/cm³ or higher and 0.970 g/cm³ or lower.

In a case of an ethylene-vinyl acetate copolymer (EVA), the density of the polyolefin (B) is preferably 0.910 g/cm³ or higher and 1.000 g/cm³ or lower, and more preferably 0.920 g/cm³ or higher and 0.970 g/cm³ or lower.

In a case of a propylene-ethylene copolymer or a propylene-ethylene-butene copolymer, the density of the polyolefin (B) is preferably 0.850 g/cm³ or higher and 0.920 g/cm³ or lower, and more preferably 0.870 g/cm³ or higher and 0.910 g/cm³ or lower.

From the perspective of improving the effect of an embodiment of the present invention, the melting point of the polyolefin (B) is preferably 110°C or higher and 155°C or lower, and more preferably 130°C or higher and 150°C or lower.

In a case where the polyolefin (B) is a random polypropylene, the melt mass-flow rate (MFR) measured at a temperature of 230°C and a load of 2.16 kg is preferably 5 g/10 minutes or more, and more preferably 20 g/10 minutes or more. The upper limit value of the MFR is, for example, preferably 5000 g/10 minutes or less, more preferably 1000 g/10 minutes or less, and particularly preferably 500 g/10 minutes or less.

In the description of the present specification, the melting point is measured at a temperature elevation speed of 10°C/min by using a differential scanning calorimetry (DSC) in accordance with ASTM D 3418. The melt mass-flow rate (MFR) is measured at a load of 2.16 kg as described above in accordance with "Plastics-Determination of the melt mass-flow rate (MFR) of thermoplastics" stipulated in JIS K 7210:1999. In the measurement conditions of the MFR, the temperature of 230°C is employed for homopolypropylene, block polypropylene, and random polypropylene, and the temperature of 190°C is employed for other polyolefins.

The polyolefin (B) to be used in an embodiment of the present invention can be a silane-grafted polyolefin obtained by grafting a hydrolytically condensable silane compound. Such a silane-grafted polyolefin can be produced by a reaction process in which the polyolefin that is a base resin is subjected to graft copolymerization with a hydrolytically condensable silane compound. Specifically, the polyolefin and a free-radical generator are allowed to coexist and heated to decompose the free-radical generator. The generated free radicals withdraw hydrogens from a polyolefin and form polymer radicals, and the polyolefin (B) to be used in an embodiment of the present invention is obtained by adding a hydrolytically condensable silane compound to the polymer radicals.

Examples of the hydrolytically condensable silane compound that can be used include vinylsilane compounds such as vinyltrimethoxysilane, vinyltriethoxysilane, and vinyltris(β-methoxyethoxy)silane; aminosilane compounds such as γ-aminopropyltrimethoxysilane, γ-aminopropyltriethoxysilane, N-β-(aminoethyl)-γ-aminopropyltrimethoxysilane, β-(aminoethyl)-γ-aminopropylmethyldimethoxysilane, and N-phenyl-γ-aminopropyltrimethoxysilane; epoxysilane compounds such as β-(3,4-epoxycyclohexyl)ethyltrimethoxysilane, γ-glycidoxypropyltrimethoxysilane, and γ-glycidoxypropylmethyldiethoxysilane; acrylic silane compounds such as γ-methacryloxypropyltrimethoxysilane; polysulfide silane compounds such as bis(3-(triethoxysilyl)propyl)disulfide and bis(3-(triethoxysilyl)propyl)tetrasulfide; and mercaptosilane compounds such as 3-mercaptopropyltrimethoxysilane and 3-mercaptopropyltriethoxysilane.

Examples of the free-radical generator that can be used include known organic peroxides and, for example, dicumyl peroxide, benzoyl peroxide, 1,1-bis(t-butylperoxy)-3,3,5-trimethylcyclohexane, t-butyl peroxy isopropyl carbonate, t-butyl peroxybenzoate, 2,5-dimethyl-2,5-bis(benzoylperoxy)hexane, methyl ethyl ketone peroxide, 2,2-bis(t-butylperoxy)butane, and cumene hydroperoxide.

Examples of the conditions of the aforementioned reaction process that subjects the polyolefin that is a base resin to graft copolymerization with the hydrolytically condensable silane compound include conditions of blending 0.1 to 10 parts by mass of the hydrolytically condensable silane compound per 100 parts by mass of the polyolefin as a base resin and mixing the obtained blended product at a temperature equal to or greater than the melting point of the polyolefin. The added amount of the free-radical generator is, for example, approximately from 0.01 to 0.5 parts by mass per 100 parts by mass of the polyolefin described above. Note that the reaction conditions of the graft copolymerization are known and are, for example, described in JP 5768696 B. During the reaction process described above, a known additive such as an antioxidant can be added to a reaction system.

### Carbon Black

The rubber composition of an embodiment of the present invention may contain carbon black. From the perspective of improving the effect of an embodiment of the present invention, the carbon black to be used in an embodiment of the present invention has a nitrogen adsorption specific surface area (N₂SA) of preferably 20 to 300 m²/g, and more preferably 40 to 150 m²/g.

The nitrogen adsorption specific surface area (N₂SA) is a value determined in accordance with JIS K 6217-2.

### Silica

The rubber composition of an embodiment of the present invention may contain silica. From the perspective of improving the effect of an embodiment of the present invention, the silica to be used in an embodiment of the present invention has a nitrogen adsorption specific surface area N₂SA of preferably 20 to 300 m²/g, and more preferably 80 to 250 m²/g.

### Blended Proportion of Rubber Composition

The rubber composition of an embodiment of the present invention includes, per 100 parts by mass of a rubber component (A), 1 to 100 parts by mass of a polyolefin (B) having a hydrolytically condensable silyl group in a molecule (however, except a high-density polyethylene having a density of 0.950 g/cm³ or higher) blended.

When the blended amount of the polyolefin (B) is less than 1 part by mass, the effect of an embodiment of the present invention cannot be achieved due to the excessively small blended amount. On the other hand, when the blended amount is more than 100 parts by mass, rubber elasticity significantly decreases.

In the rubber composition of an embodiment of the present invention, the blended amount of the polyolefin (B) is preferably from 5 to 80 parts by mass, and more preferably from 10 to 50 parts by mass, per 100 parts by mass of the rubber component.

In the rubber composition of an embodiment of the present invention, the blended amount of the carbon black and/or the silica is preferably from 20 to 200 parts by mass per 100 parts by mass of the rubber component.

Specifically, in the rubber composition of an embodiment of the present invention, the blended amount of the carbon black is preferably from 5 to 200 parts by mass per 100 parts by mass of the rubber component, and the blended amount of the silica is preferably from 0 to 195 parts by mass, and more preferably from 5 to 100 parts by mass, per 100 parts by mass of the rubber component.

### Additional Components

The rubber composition in an embodiment of the present invention can be blended with, in addition to the components described above, various additives commonly blended in rubber compositions, such as vulcanizing or crosslinking agents; vulcanizing or crosslinking accelerators; various fillers, such as clay, talc, calcium carbonate, and aluminum hydroxide; anti-aging agents; plasticizers; resins; curing agents; silane coupling agents; and processing aids. The additives are kneaded by a common method to obtain a composition that can then be used for vulcanization or crosslinking. The blended amount of such an additive may be any standard blended amount in the related art, so long as the object of the present invention is not hindered.

The rubber composition of an embodiment of the present invention has excellent processability, maintains high hardness while maintaining elongation at break, has low heat build-up, and can thus be suitably used for a tread of a tire. The tire according to an embodiment of the present invention is preferably a pneumatic tire, and can be inflated with air, an inert gas such as nitrogen, or another gas.

### Example

The present invention will be described below in further detail by way of Examples and Comparative Examples, but the present invention is not limited to these examples.

### Synthesis Examples 1 to 7 of Silane-Grafted Polyolefin

The following materials were used.
- Base polymer A: Ethylene-1-octene copolymer resin (ENGAGE 8100, available from The Dow Chemical Company; density = 0.870 g/cm³; melting point = 60°C; MFR = 1.0 g/10 minutes)
- Base polymer B: Ethylene-propylene copolymer resin (KEP 110, available from Kumho Polychem; density = 0.865 g/cm³; Mooney viscosity (ML₁₊₄100°C) = 40; propylene content = 48.0%)
- Base polymer C: Ethylene-vinyl acetate copolymer resin (Novatec EVA LV430, available from Japan Polyethylene Corporation; density = 0.940 g/cm³; melting point = 89°C; MFR = 1.0 g/10 minutes)
- Base polymer D: Low-density polyethylene obtained by using a high pressure process (Novatec LD YF30, available from Japan Polyethylene Corporation; density = 0.920 g/cm³; melting point = 108°C; MFR = 1.1 g/10 minutes)
- Base polymer E: Linear low-density polyethylene (Novatec LL UF240, available from Japan Polyethylene Corporation; density = 0.920 g/cm³; melting point = 123°C; MFR = 2.1 g/10 minutes)
- Base polymer F: High-density polyethylene (Novatec LD HY430, available from Japan Polyethylene Corporation; density = 0.956 g/cm³; melting point = 135°C; MFR = 0.8 g/10 minutes)
- Base polymer G: Random polypropylene (Novatec PP MG05ES, available from Japan Polypropylene Corporation; density = 0.900 g/cm³; melting point = 148°C; MFR = 45 g/10 minutes)
- Hydrolytically condensable silane compound 1: Vinyltrimethoxysilane (KBM 1003, available from Shin-Etsu Chemical Co., Ltd.)
- Hydrolytically condensable silane compound 2: Vinyltriethoxysilane (KBE 1003, available from Shin-Etsu Chemical Co., Ltd.)
- Free-radical generator: Dicumyl peroxide
- Antioxidant: Irganox 1010, available from BASF Japan Ltd.

The base polymer, the hydrolytically condensable silane compound, the free-radical generator, and the antioxidant described above were used according to formulation (parts by mass) in Table 1 below and supplied to a grafting reaction through an extruder described below, and thus each of silane-grafted polyolefins of Synthesis Examples 1 to 7 was obtained.

As an extruder, an extruder having an L/D of 28 and a screw outer diameter of 65 mm was used. The temperature condition for each temperature zone was as follows. That is, the first region was 160°C, the second region was 180°C, the third region was 200°C, the fourth region was 230°C, the head region was 230°C, and the die region was 230°C. Under the conditions described above, the resultant product was extruded, water-cooled, and pelletized by using a pelletizer.

**Table 1]**

| | Synthesis Example 1 | Synthesis Example 2 | Synthesis Example 3 | Synthesis Example 4 | Synthesis Example 5 | Synthesis Example 6 | Synthesis Example 7 |
|---|---|---|---|---|---|---|---|
| Base polymer type | A | B | C | D | E | F | G |
| Base polymer | 100 | 100 | 100 | 100 | 100 | 100 | 100 |
| Hydrolytically condensable silane compound 1 | 1.5 | | | 1.5 | 1.5 | 1.5 | |
| Hydrolytically condensable silane compound 2 | | 1.9 | 1.9 | | | | 1.9 |
| Free-radical generator | 0.1 | 0.1 | 0.1 | 0.1 | 0.1 | 0.1 | 0.1 |
| Antioxidant | 0.1 | 0.1 | 0.1 | 0.1 | 0.1 | 0.1 | 0.1 |

### Examples 1 to 6 and Comparative Examples 1 to 5

### Preparation of Sample

According to the compounding proportion (parts by mass) presented in Table 2, the components other than the vulcanization components (vulcanization accelerators and sulfur) were mixed for 5 minutes in a Banbury mixer at 80°C. The temperature reached at this time was 150°C, which was higher than the melting points of polyolefins that were base resins. Then, the vulcanization components were added and mixed by using a roll and thus a rubber composition was obtained. The following evaluations were performed for the rubber composition.

### Compound Processability (Processability of Each Rubber Composition)

For each of the obtained (unvulcanized) rubber compositions, processability as a compound was evaluated by measuring the Mooney viscosity (ML). The Mooney viscosity of each of the rubber compositions was measured in accordance with JIS K 6300 using an L-type rotor (diameter: 38.1 mm, thickness: 5.5 mm) in a Mooney viscometer under the conditions of a preheating time of 1 minute, a rotor rotation time of 4 minutes, 100°C, and 2 rpm. The result was expressed as an index value of a reciprocal of the obtained numerical value. Specifically, Comparative Example 1 was assigned the value of 100. A larger index value indicates a lower viscosity and superior processability. The index value of 100 is deemed to have processability adequate for practical use.

### Production of Vulcanized Rubber Sheet for Evaluation

A vulcanized rubber sheet (vulcanized rubber test piece) was prepared by press-vulcanizing each of the obtained (unvulcanized) rubber compositions for 10 minutes at 170°C in a mold (15 cm × 15 cm × 0.2 cm).

### Elongation at Break

For the vulcanized rubber test piece prepared as described above, dumbbell-shaped JIS No. 3 test pieces (thickness: 2 mm) were punched in accordance with JIS K 6251. The tensile elongation at break was measured by performing a test at a pulling speed of 500 mm/min. The result was expressed as an index value of the obtained numerical value. Specifically, Comparative Example 1 was assigned the value of 100. A larger index value indicates a larger tensile elongation at break and superior mechanical properties.

### Heat Build-up: tan δ (60°C)

The loss tangent at a temperature of 60°C, tan δ (60°C), was measured for each of the vulcanized rubber test pieces prepared as described above using a viscoelastic spectrometer (available from Toyo Seiki Seisaku-sho, Ltd.) under the following conditions: 10% initial strain, ±2% amplitude, and 20 Hz frequency, and thus heat build-up was evaluated. The result was expressed as an index value of a reciprocal of the obtained numerical value. Specifically, Comparative Example 1 was assigned the value of 100. A larger index value indicates superior low heat build-up of a formed tire.

### Hardness

The hardness was measured at 20°C in accordance with JIS K 6253. The result was expressed as an index value of a reciprocal of the obtained numerical value. Specifically, Comparative Example 1 was assigned the value of 100. A larger index value indicates a higher degree of hardness of a formed tire. The index value of 100 is deemed to have hardness adequate for practical use.

The results are shown in Table 2.

**[Table 2-1]**

| | | Comparative Example 1 | Comparative Example 2 | Comparative Example 3 | Comparative Example 4 | Comparative Example 5 |
|---|---|---|---|---|---|---|
| NR *1 | | 50 | 50 | 50 | 50 | 50 |
| BR *2 | | 50 | 50 | 50 | 50 | 50 |
| Polyolefin (B) | Base polymer A | | 10 | | | |
| | Base polymer C | | | 10 | | |
| | Base polymer D | | | | 10 | |
| | Synthesis Example 1 | | | | | |
| | Synthesis Example 2 | | | | | |
| | Synthesis Example 3 | | | | | |
| | Synthesis Example 4 | | | | | |
| | Synthesis Example 5 | | | | | |
| | Synthesis Example 6 | | | | | 10 |
| | Synthesis Example 7 | | | | | |
| Silica 1 *3 | | 40 | 40 | 40 | 40 | 40 |
| Carbon black *4 | | 20 | 20 | 20 | 20 | 20 |
| Silane coupling agent *5 | | 2 | 2 | 2 | 2 | 2 |
| Zinc oxide *6 | | 3 | 3 | 3 | 3 | 3 |
| Stearic acid *7 | | 1.5 | 1.5 | 1.5 | 1.5 | 1.5 |
| Anti-aging agent *8 | | 2 | 2 | 2 | 2 | 2 |
| Sulfur *9 | | 2 | 2 | 2 | 2 | 2 |
| Vulcanization accelerator 1 *10 | | 1.5 | 1.5 | 1.5 | 1.5 | 1.5 |
| Vulcanization accelerator 2 *11 | | 0.5 | 0.5 | 0.5 | 0.5 | 0.5 |
| Measurement result | | | | | | |
| Processability | | 100 | 106 | 112 | 106 | 84 |
| Elongation at break | | 100 | 98 | 115 | 103 | 90 |
| Heat build-up | | 100 | 98 | 98 | 90 | 77 |
| Hardness | | 100 | 99 | 101 | 104 | 108 |

**[Table 2-2]**

| | | Example 1 | Example 2 | Example 3 | Example 4 | Example 5 | Example 6 |
|---|---|---|---|---|---|---|---|
| NR *1 | | 50 | 50 | 50 | 50 | 50 | 50 |
| BR *2 | | 50 | 50 | 50 | 50 | 50 | 50 |
| Polyolefin (B) | Base polymer A | | | | | | |
| | Base polymer C | | | | | | |
| | Base polymer D | | | | | | |
| | Synthesis Example 1 | 10 | | | | | |
| | Synthesis Example 2 | | 10 | | | | |
| | Synthesis Example 3 | | | 10 | | | |
| | Synthesis Example 4 | | | | 10 | | |
| | Synthesis Example 5 | | | | | 10 | |
| | Synthesis Example 6 | | | | | | |
| | Synthesis Example 7 | | | | | | 10 |
| Silica 1 *3 | | 40 | 40 | 40 | 40 | 36 | 30 |
| Carbon black *4 | | 20 | 20 | 20 | 20 | 18 | 15 |
| Silane coupling agent *5 | | 2 | 2 | 2 | 2 | 2 | 2 |
| Zinc oxide *6 | | 3 | 3 | 3 | 3 | 3 | 3 |
| Stearic acid *7 | | 1.5 | 1.5 | 1.5 | 1.5 | 1.5 | 1.5 |
| Anti-aging agent *8 | | 2 | 2 | 2 | 2 | 2 | 2 |
| Sulfur *9 | | 2 | 2 | 2 | 2 | 2 | 2 |
| Vulcanization accelerator 1 *10 | | 1.5 | 1.5 | 1.5 | 1.5 | 1.5 | 1.5 |
| Vulcanization accelerator 2 *11 | | 0.5 | 0.5 | 0.5 | 0.5 | 0.5 | 0.5 |
| Measurement result | | | | | | | |
| Processability | | 103 | 109 | 106 | 103 | 100 | 100 |
| Elongation at break | | 105 | 103 | 116 | 108 | 101 | 107 |
| Heat build-up | | 115 | 102 | 105 | 101 | 101 | 125 |
| Hardness | | 100 | 100 | 103 | 104 | 106 | 103 |

| | | | | | | | |
|---|---|---|---|---|---|---|---|
| *1: NR (SIR20) *2: BR (Nipol BR1220, available from Zeon Corporation; number average molecular weight = 1.8 × 10⁵) *3: Silica 1 (Zeosil 1085GR, available from Solvay Japan; nitrogen adsorption specific surface area (N₂SA) = 90 m²/g; CTAB specific surface area = 80 m²/g) *4: Carbon black (trade name: Show Black N339, available from Cabot Japan K.K.; nitrogen adsorption specific surface area (N₂SA) = 88 m²/g; CTAB specific surface area = 90 m²/g) *5: Silane coupling agent (Si69, available from Evonik Degussa; bis(3-triethoxysilylpropyl)tetrasulfide *6: Zinc oxide (Zinc Oxide III, available from Seido Chemical Industry Co., Ltd.) *7: Stearic acid (Stearic acid YR, available from NOF Corporation) *8: Anti-aging agent (Santoflex 6PPD, available from Flexsys) *9: Sulfur (oil-treated sulfur, available from Karuizawa Refinery Ltd.) *10: Vulcanization accelerator 1 (NOCCELER CZ-G, available from Ouchi Shinko Chemical Industrial Co., Ltd.) *11: Vulcanization accelerator 2 (NOCCELER D, available from Ouchi Shinko Chemical Industrial Co., Ltd.) | | | | | | | |

### Examples 7 to 10 and Comparative Example 6

The aforementioned "Examples 1 to 6 and Comparative Examples 1 to 5" was repeated except for changing the blended amounts of the materials as listed in Table 3 below, and thus the evaluations were performed. Each of the evaluation results was shown as an index value with Comparative Example 6 being assigned the value of 100. The results are shown in Table 3.

**[Table 3]**

| | | Comparative Example 6 | Example 7 | Example 8 | Example 9 | Example 10 |
|---|---|---|---|---|---|---|
| NR *1 | | 60 | 60 | 60 | 60 | 60 |
| BR *2 | | 40 | 40 | 40 | 40 | 40 |
| Polyolefin (B) | Base polymer A | | | | | |
| | Base polymer C | | | | | |
| | Base polymer D | | | | | |
| | Synthesis Example 1 | | | | | |
| | Synthesis Example 2 | | | | | |
| | Synthesis Example 3 | | 25 | 50 | 75 | 100 |
| | Synthesis Example 4 | | | | | |
| | Synthesis Example 5 | | | | | |
| | Synthesis Example 6 | | | | | |
| Silica *3 | | 30 | 30 | 30 | 30 | 30 |
| Carbon black *4 | | 20 | 20 | 20 | 20 | 20 |
| Silane coupling agent *5 | | 2 | 2 | 2 | 2 | 2 |
| Zinc oxide *6 | | 3 | 3 | 3 | 3 | 3 |
| Stearic acid *7 | | 1.5 | 1.5 | 1.5 | 1.5 | 1.5 |
| Anti-aging agent *8 | | 2 | 2 | 2 | 2 | 2 |
| Sulfur *9 | | 2 | 2 | 2 | 2 | 2 |
| Vulcanization accelerator 1 *10 | | 1.5 | 1.5 | 1.5 | 1.5 | 1.5 |
| Vulcanization accelerator 2 *11 | | 0.5 | 0.5 | 0.5 | 0.5 | 0.5 |
| Measurement result | | | | | | |
| Processability | | 100 | 114 | 107 | 105 | 103 |
| Elongation at break | | 100 | 113 | 114 | 116 | 117 |
| Heat build-up | | 100 | 116 | 116 | 120 | 122 |
| Hardness | | 100 | 114 | 124 | 132 | 142 |

### Example 11 and Comparative Examples 7 and 8

The aforementioned "Examples 1 to 6 and Comparative Examples 1 to 5" was repeated except for changing the blended amounts of the materials as listed in Table 4 below, and thus the evaluations were performed. Each of the evaluation results was shown as an index value with Comparative Example 7 being assigned the value of 100. The results are shown in Table 4.

**[Table 4]**

| | | Comparative Example 7 | Comparative Example 8 | Example 11 |
|---|---|---|---|---|
| NR *1 | | 50 | 50 | 50 |
| BR *2 | | 50 | 50 | 50 |
| Polyolefin (B) | Base polymer A | | 10 | |
| | Base polymer C | | | |
| | Base polymer D | | | |
| | Synthesis Example 1 | | | 10 |
| | Synthesis Example 2 | | | |
| | Synthesis Example 3 | | | |
| | Synthesis Example 4 | | | |
| | Synthesis Example 5 | | | |
| | Synthesis Example 6 | | | |
| Silica *3 | | | | |
| Carbon black *4 | | 70 | 70 | 70 |
| Silane coupling agent *5 | | | | |
| Zinc oxide *6 | | 3 | 3 | 3 |
| Stearic acid *7 | | 1.5 | 1.5 | 1.5 |
| Anti-aging agent *8 | | 2 | 2 | 2 |
| Sulfur *9 | | 2 | 2 | 2 |
| Vulcanization accelerator 1 *10 | | 1.5 | 1.5 | 1.5 |
| Vulcanization accelerator 2 *11 | | | | |
| Measurement result | | | | |
| Processability | | 100 | 107 | 100 |
| Elongation at break | | 100 | 117 | 113 |
| Heat build-up | | 100 | 89 | 101 |
| Hardness | | 100 | 100 | 100 |

### Example 12 and Comparative Example 9

The aforementioned "Examples 1 to 6 and Comparative Examples 1 to 5" was repeated except for changing the blended amounts of the materials as listed in Table 5 below, and thus the evaluations were performed. Vulcanized rubber sheets were prepared by changing the press vulcanization conditions to 170°C for 30 minutes in "Production of Vulcanized Rubber Sheet for Evaluation". Each of the evaluation results was shown as an index value with Comparative Example 9 being assigned the value of 100. The results are shown in Table 5. As the hydrogenated nitrile rubber, Zetpol 2320L (bound acrylonitrile amount: 36.2%; iodine value: 56.60 mg/100 mg; Mooney viscosity: 57.5), available from Zeon Corporation, was used.

**[Table 5]**

| | | Comparative Example 9 | Example 12 |
|---|---|---|---|
| Hydrogenated nitrile rubber | | 100 | 100 |
| Polyolefin (B) | Base polymer A | | |
| | Base polymer C | | |
| | Base polymer D | | |
| | Synthesis Example 1 | | |
| | Synthesis Example 2 | | |
| | Synthesis Example 3 | | 10 |
| | Synthesis Example 4 | | |
| | Synthesis Example 5 | | |
| | Synthesis Example 6 | | |
| Silica *3 | | 40 | 40 |
| Carbon black *4 | | 20 | 20 |
| Silane coupling agent *5 | | 2 | 2 |
| Zinc oxide *6 | | 3 | 3 |
| Stearic acid *7 | | 1.5 | 1.5 |
| Anti-aging agent *8 | | 2 | 2 |
| Sulfur *9 | | 2 | 2 |
| Vulcanization accelerator 1 *10 | | 1.5 | 1.5 |
| Vulcanization accelerator 2 *11 | | 0.5 | 0.5 |
| Measurement result | | | |
| Processability | | 100 | 102 |
| Elongation at break | | 100 | 112 |
| Heat build-up | | 100 | 108 |
| Hardness | | 100 | 103 |

### Examples 13 to 15 and Comparative Example 10

The aforementioned "Examples 1 to 6 and Comparative Examples 1 to 5" was repeated except for changing the blended amounts of the materials as listed in Table 6 below, and thus the evaluations were performed. Each of the evaluation results was shown as an index value with Comparative Example 10 being assigned the value of 100. The results are shown in Table 6.

**[Table 6]**

| | | Comparative Example 10 | Example 13 | Example 14 | Example 15 |
|---|---|---|---|---|---|
| NR *1 | | 50 | 50 | 50 | 100 |
| BR *2 | | 50 | 50 | 50 | |
| Polyolefin (B) | Base polymer A | | | | |
| | Base polymer C | | | | |
| | Base polymer D | | | | |
| | Synthesis Example 1 | | | | |
| | Synthesis Example 2 | | | | |
| | Synthesis Example 3 | | | | |
| | Synthesis Example 4 | | | | |
| | Synthesis Example 5 | | | | |
| | Synthesis Example 6 | | | | |
| | Synthesis Example 7 | | 10 | | 10 |
| Silylated random polypropylene *12 | | | | 10 | |
| Silica 2 *13 | | 40 | 30 | 40 | 30 |
| Carbon black *4 | | 20 | 15 | 20 | 15 |
| Silane coupling agent *5 | | 2 | 2 | 2 | 2 |
| Zinc oxide *6 | | 3 | 3 | 3 | 3 |
| Stearic acid *7 | | 1.5 | 1.5 | 1.5 | 1.5 |
| Anti-aging agent *8 | | 2 | 2 | 2 | 2 |
| Sulfur *9 | | 2 | 2 | 2 | 2 |
| Vulcanization accelerator 1 *10 | | 1.5 | 1.5 | 1.5 | 1.5 |
| Vulcanization accelerator 2 *11 | | 0.5 | 0.5 | 0.5 | 0.5 |
| Measurement result | | | | | |
| Processability | | 100 | 100 | 110 | 100 |
| Elongation at break | | 100 | 107 | 107 | 115 |
| Heat build-up | | 100 | 125 | 106 | 121 |
| Hardness | | 100 | 103 | 100 | 102 |

| | | | | | |
|---|---|---|---|---|---|
| *12: Silylated random polypropylene (Linklon PM700N, available from Mitsubishi Chemical Corporation; density before silylation = approximately 0.880 g/cm³; melting point = 77°C; MFR = 17 g/10 minutes) *13: Silica 2 (Zeosil 1165MP, available from Solvay Japan; nitrogen adsorption specific surface area (N₂SA) = 160 m²/g; CTAB specific surface area = 159 m²/g) | | | | | |

### Example 16 and Comparative Example 11

The aforementioned "Examples 1 to 6 and Comparative Examples 1 to 5" was repeated except for changing the blended amounts of the materials as listed in Table 7 below, and thus the evaluations were performed. Each of the evaluation results was shown as an index value with Comparative Example 16 being assigned the value of 100. The results are shown in Table 7.

**[Table 7]**

| | | Comparative Example 11 | Example 16 |
|---|---|---|---|
| SBR *14 | | 100 | 100 |
| Polyolefin (B) | Base polymer A | | |
| | Base polymer C | | |
| | Base polymer D | | |
| | Synthesis Example 1 | | |
| | Synthesis Example 2 | | |
| | Synthesis Example 3 | | |
| | Synthesis Example 4 | | |
| | Synthesis Example 5 | | |
| | Synthesis Example 6 | | |
| | Synthesis Example 7 | | 10 |
| Silica 2 *13 | | 40 | 30 |
| Carbon black *4 | | 20 | 15 |
| Silane coupling agent *5 | | 2 | 2 |
| Zinc oxide *6 | | 3 | 3 |
| Stearic acid *7 | | 1.5 | 1.5 |
| Anti-aging agent *8 | | 2 | 2 |
| Sulfur *9 | | 2 | 2 |
| Vulcanization accelerator 1 *10 | | 1.5 | 1.5 |
| Vulcanization accelerator 2 *11 | | 0.5 | 0.5 |
| Measurement result | | | |
| Processability | | 100 | 100 |
| Elongation at break | | 100 | 114 |
| Heat build-up | | 100 | 111 |
| Hardness | | 100 | 101 |

| | | | |
|---|---|---|---|
| *14: SBR (Nipol 1502, available from Zeon Corporation) | | | |

The results in the tables above shows that the rubber composition of each Example includes, per 100 parts by mass of the rubber component (A), 1 to 100 parts by mass of the polyolefin (B) having a hydrolytically condensable silyl group in a molecule (however, except a high-density polyethylene having a density of 0.950 g/cm³ or higher) and that adequate processability and hardness are achieved, elongation at break is maintained, and low heat build-up is achieved compared to Comparative Examples 1, 6, 7, 9, 10, or 11.

On the other hand, because Comparative Examples 2 to 4 in Table 2 were examples that used the base polymer A, C, or D in place of the polyolefin (B), elongation at break and heat build-up deteriorated. Because Comparative Example 5 was an example that used a high-density polyethylene having a density of 0.950 g/cm³ or higher, processability, elongation at break, and heat build-up deteriorated.

Furthermore, it was found that, although Examples 7 to 10 of Table 3 were examples having various blended amounts of the polyolefin (B) that had been changed, similarly to results of Table 1, adequate processability and hardness were achieved, elongation at break was maintained, and low heat build-up was achieved.

Furthermore, it was found that, although Example 11 of Table 4 was an experiment of a system that did not contain silica, similarly to results of Table 1, adequate processability and hardness were achieved, elongation at break was maintained, and low heat build-up was achieved. Because Comparative Example 8 was an example that used the base polymer A in place of the polyolefin (B), the effect of an embodiment of the present invention could not be exhibited.

Furthermore, it was found that, although Example 12 of Table 5 was an example that used a hydrogenated product as the rubber component (A), adequate processability and hardness were achieved, elongation at break was maintained, and low heat build-up was achieved.

Furthermore, Examples 13 and 14 of Table 6 were examples each using a random PP as the polyolefin (B), and it was found that adequate processability and hardness were achieved, elongation at break was maintained, and low heat build-up was achieved. Furthermore, it was found that, although Example 15 was an example that used 100 mass% of the natural rubber as the rubber component (A), adequate processability and hardness were achieved, elongation at break was maintained, and low heat build-up was achieved.

The present disclosure includes the following embodiments of the invention.

Invention [1]: A rubber composition including,
per 100 parts by mass of a rubber component (A), 1 to 100 parts by mass of a polyolefin (B) having a hydrolytically condensable silyl group in a molecule (however, except a high-density polyethylene having a density of 0.950 g/cm³ or higher) blended.

Invention [2]: The rubber composition according to Invention 1, wherein the polyolefin (B) is a silane-grafted polyolefin obtained by grafting a hydrolytically condensable silane compound.

Invention [3]: The rubber composition according to Invention 1 or 2, further including, per 100 parts by mass of the rubber component (A), 20 to 200 parts by mass of carbon black and/or silica blended.

Invention [4]: The rubber composition according to any one of Inventions 1 to 3, wherein the rubber component (A) is natural rubber (NR), isoprene rubber (IR), butadiene rubber (BR), styrene-butadiene copolymer rubber (SBR), acrylonitrile-butadiene copolymer rubber (NBR), or a hydrogenated product of these.

Invention [5]: The rubber composition according to any one of Inventions 1 to 4, wherein the polyolefin (B) contains, as a main backbone, an ethylene-α-olefin copolymer, an ethylene-vinyl acetate copolymer, or an ethylene-methyl acrylate copolymer.

Invention [6]: A method for producing a rubber composition, the method including:
blending 0.1 to 10 parts by mass of a hydrolytically condensable silane compound per 100 parts by mass of a polyolefin (however, except a high-density polyethylene having a density of 0.950 g/cm³ or higher) as a base resin;
mixing an obtained blended product at a temperature equal to or greater than a melting point of the base resin;
obtaining the polyolefin (B) having a hydrolytically condensable silyl group in a molecule; and
blending and mixing 1 to 100 parts by mass of the polyolefin (B) into 100 parts by mass of a rubber component (A).

Invention [7]: A tire using the rubber composition according to any one of Inventions 1 to 5.

## Claims

1. A rubber composition, comprising,
per 100 parts by mass of a rubber component (A),
1 to 100 parts by mass of a polyolefin (B) having a hydrolytically condensable silyl group in a molecule (however, except a high-density polyethylene having a density of 0.950 g/cm³ or higher) blended.

2. The rubber composition according to claim 1, wherein the polyolefin (B) is a silane-grafted polyolefin obtained by grafting a hydrolytically condensable silane compound.

3. The rubber composition according to claim 1, further comprising, per 100 parts by mass of the rubber component (A), 20 to 200 parts by mass of carbon black and/or silica blended.

4. The rubber composition according to claim 1, wherein the rubber component (A) is natural rubber (NR), isoprene rubber (IR), butadiene rubber (BR), styrene-butadiene copolymer rubber (SBR), acrylonitrile-butadiene copolymer rubber (NBR), or a hydrogenated product of these.

5. The rubber composition according to claim 1, wherein the polyolefin (B) contains, as a main backbone, an ethylene-α-olefin copolymer, an ethylene-vinyl acetate copolymer, an ethylene-methyl acrylate copolymer, a propylene-ethylene copolymer, or a propylene-ethylene-butene copolymer.

6. A method for producing a rubber composition, the method comprising:
blending 0.1 to 10 parts by mass of a hydrolytically condensable silane compound per 100 parts by mass of a polyolefin (however, except a high-density polyethylene having a density of 0.950 g/cm³ or higher) as a base resin;
mixing an obtained blended product at a temperature equal to or greater than a melting point of the base resin;
obtaining the polyolefin (B) having a hydrolytically condensable silyl group in a molecule; and
blending and mixing 1 to 100 parts by mass of the polyolefin (B) into 100 parts by mass of a rubber component (A).

7. A tire using the rubber composition according to claim 1.
